# EUROPEAN PATENT SPECIFICATION

(11) **EP 1 747 837 B1**
(45) Date of publication and mention of the grant of the patent: **11.03.2009**
(21) Application number: 06013833.6
(22) Date of filing: 04.07.2006
(51) Int. Cl.: B23K 26/06, B23K 26/20, B23K 26/36, H01S 3/036

(54) **Gas laser processing device with control means for adapting the laser gas pressure to the work to be processed**
Gaslaser-Bearbeitungseinrichtung mit Steuerung zum Anpassen des Gaslaserdruckes zum bearbeitenden Werkstück
Dispositif de traitement par laser à gaz avec des moyens de contrôle pour adapter la pression du gaz en fonction de la pièce à traiter

(30) Priority: 25.07.2005 JP 2005214668
(43) Date of publication of application: 31.01.2007
(73) Proprietor: FANUC LTD, Minamitsuru-gun, Yamanashi 401-0597 (JP)
(72) Inventor: Takazane, Tetsuhisa FANUC Dai3virakaramatsu, Minamitsuru-gun Yamanashi 401-0511 (JP); Murakami, Takafumi FANUC Manshonharimomi,no.8-202, Minamitsuru-gun Yamanashi 401-0511 (JP); Maeda, Michinori, Gotenba-shi Shizuoka 412-0042 (JP); Okazaki, Ryoma FANUC Manshonharimomi, no.7-205, Minamitsuru-gun Yamanashi 401-0511 (JP); Egawa, Akira, Shizuoka 412-0043 (JP)
(74) Representative: Thum, Bernhard

(56) References cited:
- JP-A- 61 123 495
- JP-A- 62 265 784
- JP-A- 63 253 688
- US-B1- 6 392 743

## Description

The present invention relates to a laser processing device according to the preamble of claim 1 (see, for example, US-B1-6 392 743).

### Description of the Related Art

A laser processing device in general use includes a laser oscillator and a laser machine. A laser beam is output from the laser oscillator, and is focused on a work to be processed, by a focusing lens of the laser machine. As a result, the work to be processed is processed by a laser. In the case where a work to be processed is processed by this ordinary laser processing device, the processing conditions are predetermined based on the material of the work to be processed, the shape into which to be processed and the required cutting quality.

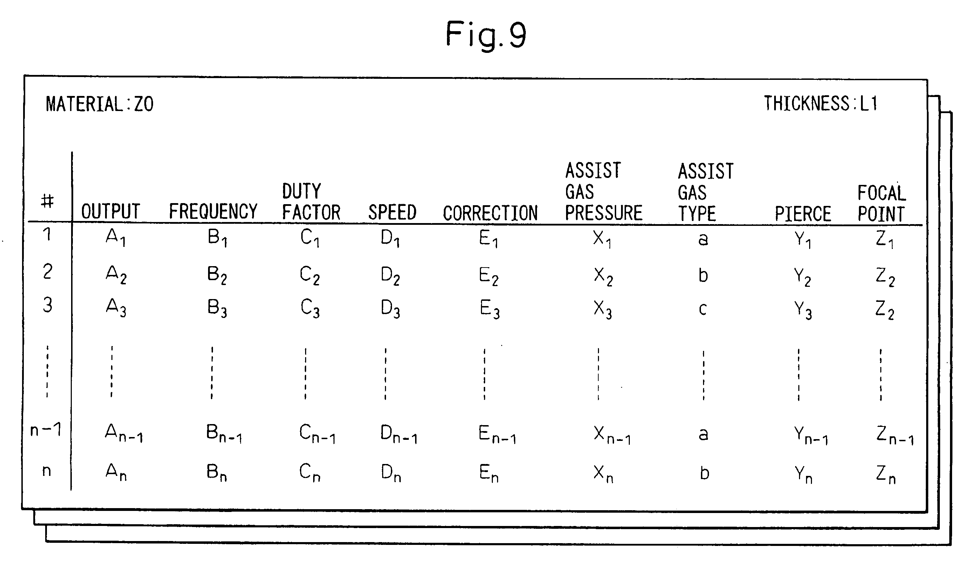

Fig. 9 is a schematic diagram showing a data table of the processing conditions for an ordinary laser processing device as disclosed in Japanese Unexamined Patent Publication No. 5-23883. The data table is prepared in accordance with the work to be processed and stored in a storage unit of the laser processing device. As shown in Fig. 9, the data table has stored therein the materials of the work to be processed and the processing conditions for the work to be processed. The processing conditions in the data table include those of the laser oscillator and those of the laser machine of the laser processing device.

In Fig. 9, the processing conditions for the laser oscillator include the laser power (output), the frequency, the duty factor, the processing speed (velocity) and the laser beam correction amount (correction), for example. Also, the processing conditions for the laser machine shown in Fig. 9 include the pressure of the assist gas supplied to the processing head (assist gas pressure), the type of the assist gas, the time required for the pierce operation (piercing), the focal point (focus) and the thickness of the work to be processed (plate thickness).

At the time of laser processing, the processing conditions included in the work data table are accessed and the laser processing operation is executed based on these processing conditions. Especially, and in the case of Japanese Unexamined Patent Publication No. 5-23883 as shown in Fig. 9, the assist gas pressure for the laser machine is added to the data table and can be changed in accordance with the processing specifics. In the case of Japanese Unexamined Patent Publication No. 5-23883, therefore, the processing performance for the work to be processed is improved.

In the conventional laser oscillator as disclosed in Japanese Unexamined Patent Publication No. 5-23883, the pressure of the laser gas, though adjusted at the time of activating or deactivating the laser oscillator in some cases, is normally fixed to a specified value and not changed during the laser processing operation. A change in the laser gas pressure in the laser oscillator leads to a change in the characteristic of the laser beam output, and therefore it is desirable to set the laser gas pressure at an optimum level in accordance with the work material, the shape into which to be processed, the required cutting quality, etc. In the conventional laser processing device as disclosed in Japanese Unexamined Patent Publication No. 5-23883, the laser gas pressure is not changed and, therefore, an improvement in the processing performance of the laser processing device is limited.

In the prior art, therefore, it is difficult to process a plurality of works different in material, the shape into which it is to be processed or the required cutting quality in the same laser processing device. In processing these works, a plurality of laser processing devices or a plurality of focusing lenses having different focal lengths are required to be prepared for different materials of the work, or a plurality of processing heads are required to be used in accordance with the work material.

US B1 6,392,743 discloses a process to optimize laser conditions for a laser lithography system to process silicon wafers. According to the optimizing process, prior to exposing a lot to the laser, the laser's total gas pressure, F₂ partial pressure, blower speed or energy control algorithm can be optimized for the parameters of the new lot to be processed.

JP 63-253688 discloses to use a numerical controller to control gas pressure of a gas laser oscillator instead of a special gas-pressure controller.

JP 62-265784 describes the use of a pressure presetter provided in a feed pipe of an electric insulating gas to prevent malfunctions of a laser during voltage changes.

JP 61-123495 discloses to adapt the kind of assist gas, laser output, assist gas pressure and assist gas flow rate to material quality and plate thickness of a workpiece.

The present invention has been achieved in view of this situation, and the object thereof is to provide a laser processing device in which the processing performance is further improved by outputting the laser beam suited to the work material, the shape into which it is to be processed and the required cutting quality.

### SUMMARY OF THE INVENTION

In order to achieve the object described above, according to the invention, there is provided a laser processing device according to claim 1. It comprises a laser oscillator for outputting a laser beam by exciting a laser gas, a laser machine for irradiating a work with a laser beam output from the laser oscillator, and a control means for controlling the laser oscillator and the laser machine, wherein the control means includes a storage means for storing a processing program for the work, and the processing program includes a required laser gas pressure value of the laser oscillator for the laser processing operation, which value is determined in accordance with the processing specifics of the work, wherein the control means further includes a laser gas pressure command transmission means for transmitting a laser gas pressure command based on the required laser gas pressure value to the laser oscillator, and wherein the laser oscillator includes a laser gas pressure changing means for changing the laser gas pressure of the laser oscillator in accordance with a laser gas pressure command transmitted by the laser gas pressure command transmission means, during the laser processing operation.

The control means further includes a required laser gas pressure value adjusting means for adjusting the required laser gas pressure value, wherein the required laser gas pressure value adjusting means automatically adjusts the required laser gas pressure value in accordance with the thickness of the work and/or the laser output of the laser oscillator included in the processing program.

Specifically, in this aspect of the invention, the required laser gas pressure value is stored as the work processing conditions in accordance with the work material, the shape into which it is to be processed and the required cutting quality. Therefore, the laser gas pressure of the laser oscillator is changed based on the required laser gas pressure value at the time of laser processing. Thus, a laser beam suitable for the work material, the shape into which it is to be processed and the required cutting quality can be output for an improved processing performance of the laser processing device.

Specifically, the operator of the laser processing device easily and simply adjusts the required laser gas pressure value during the laser processing operation. Also, as the processing program is not required to be replaced, the processing operation can be switched from any one of a plurality of given works quickly to a different work, if required, during the laser processing operation.

The required laser gas pressure value adjusting means may comprise a numerical value input means. The operator then can input a specific required laser gas pressure value.

According to another aspect of the invention, there is provided a laser processing device as set forth above, wherein the required laser gas pressure value adjusting means is a switching means for switching between a high pressure mode and a low pressure mode, and the required laser gas pressure value is adjusted in accordance with the high pressure mode or the low pressure mode switched by the switching means.

Specifically, in this aspect, the required laser gas pressure value can be easily changed.

According to a further aspect of the invention, there is provided a laser processing device wherein the high pressure mode and the low pressure mode are switched automatically by the switching means in accordance with the thickness of the work and/or the laser output of the laser oscillator included in the processing program.

Specifically, in this aspect, a more suitable mode can be automatically selected in accordance with the contents of the processing program before performing the laser processing operation.

Specifically, the required laser gas pressure value can be automatically changed to an optimum value in accordance with the contents of the processing program before the laser processing operation.

According to a further aspect of the invention, there is provided a laser processing device as set forth above, wherein the storage means has stored therein the relation between the work thickness and/or the laser output and the required laser gas pressure value, wherein the control means includes a laser gas pressure command transmission means for transmitting to the laser oscillator a laser gas pressure command based on the required laser gas pressure value determined from the relation between the work thickness and/or the laser output and the required laser gas pressure value.

Specifically, in this aspect, even in the case where a conventional data table of the processing conditions not containing the required laser gas pressure value is used, the optimum required laser gas pressure value can be set from the thickness of the work and/or the laser output. As a result, a laser beam suitable for the material of the work, the shape into which it is to be processed and the required cutting quality can be output for an improved processing performance of the laser processing device.

These and other objects, features and advantages of this invention will be made more apparent from the detailed description of typical embodiments taken in conjunction with the accompanying drawings.

### BRIEF DESCRIPTION OF THE DRAWINGS

- Fig. 1: is a schematic diagram showing a laser processing device.
- Fig. 2: is a block diagram showing a laser processing device not covered by the scope of the present invention.
- Fig. 3: is a schematic diagram showing the processing condition data table included in the program stored in the storage means of the control means.
- Fig. 4: is a block diagram showing a laser processing device according to the modification shown in Fig. 2.
- Fig. 5: is a block diagram showing the required laser gas pressure value adjusting means.
- Fig. 6: is a block diagram showing a laser processing device according to the present invention as defined in the appended claims.
- Fig. 7: is a diagram showing a map of the laser gas pressure.
- Fig. 8a: is a flowchart showing an operation of the required laser gas pressure value adjusting means.
- Fig. 8b: is a flowchart showing another operation of the required laser gas pressure value adjusting means.
- Fig. 9: is a schematic diagram showing the processing condition data table for an ordinary laser processing device.

### DETAILED DESCRIPTION

Embodiments of the invention are described below with reference to the accompanying drawings. In the drawings, the same component members are designated by the same reference numerals, respectively. To facilitate understanding, the scales of the drawings are appropriately changed.

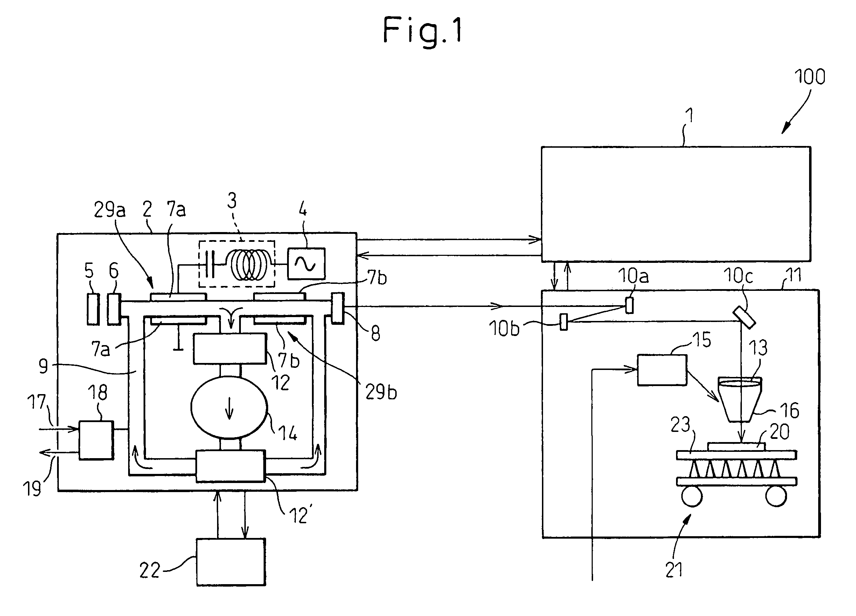

Fig. 1 is a schematic diagram showing a laser processing device. A laser processing device 100 according to the invention includes a laser oscillator 2 and a laser machine 11. As shown in Fig. 1, the laser oscillator 2 and the laser machine 11 are electrically connected to each other through a control means 1.

The laser oscillator 2 is a gas laser oscillator of discharge excitation type comparatively high in output, such as a carbon dioxide gas laser of 1 kW or more in output. The laser oscillator 2 includes a discharge tube 9 connected to a laser gas pressure changing means 18. The laser gas pressure changing means 18 can supply the laser gas to the discharge tube 9 through a laser gas supply port 17 and can discharge the laser gas from the discharge tube 9 through a laser gas discharge port 19 formed in the laser oscillator 2. A rear mirror 6 (internal resonator mirror) having a partial transmissivity is arranged at an end of the discharge tube 9, and an output mirror 8 having a partial transmissivity at the other end of the discharge tube 9. The output mirror 8 is formed of ZnSe. The inner surface of the output mirror 8 is coated for partial reflection and the outer surface of the output mirror 8 is coated for non-reflection. A laser power sensor 5 is arranged on the back of the rear mirror 6. As shown, two discharge sections 29a, 29b are formed in the optical resonator between the rear mirror 6 and the output mirror 8.

The discharge sections 29a, 29b each include a pair of discharge electrodes 7a, 7b arranged in positions to sandwich the discharge tube 9. The discharge electrodes 7a, 7b are assumed to have the same size and to be metalized or have a metal member mounted thereon. As shown in Fig. 1, the discharge electrode 7a is connected to a laser power supply 4 through a matching circuit 3. The discharge electrode 7b, which is also connected to a laser power supply through a similar matching circuit, is not shown to facilitate understanding. These laser power supplies are controlled independently of each other so that the power supplied to the corresponding discharge sections 29a, 29b can be freely adjusted.

Further, as shown, a turbo blower 14 is arranged on the discharge tube 9, and heat exchangers 12, 12' are arranged upstream and downstream, respectively, of the turbo blower. Furthermore, the laser oscillator 2 is connected to a cooling water circulation system 22 to appropriately cool the laser gas, etc. in the discharge tube 9.

The laser beam output from the output mirror 8 of the laser oscillator 2 enters the laser machine 11. The laser machine 11 includes a plurality of, or in Fig. 1, three reflectors 10a, 10b, 10c for reflecting the laser incident to the laser machine 11. As shown, the laser reflected from the reflectors 10a, 10b, 10c is radiated on a work 20 on a processing table 23 through a focusing lens 13 and a processing head 16. The focusing lens 13 is formed of ZnSe and the two surfaces thereof are coated for non-reflection.

By moving the processing table 23 in horizontal direction by a processing table moving means 21, the work 20 is set In position as desired. In similar fashion, the processing head 16 is moved in horizontal and vertical directions by a processing head moving means (not shown) and set in position as desired. Further, as shown in Fig. 1, the laser machine 11 includes an assist gas supply system 15. The assist gas from an assist gas source (not shown) arranged outside the laser machine 11 is supplied into the processing head 16 by an assist gas supply system 15. The assist gas in the assist gas source may be an inert gas such as nitrogen gas or it may be dry air.

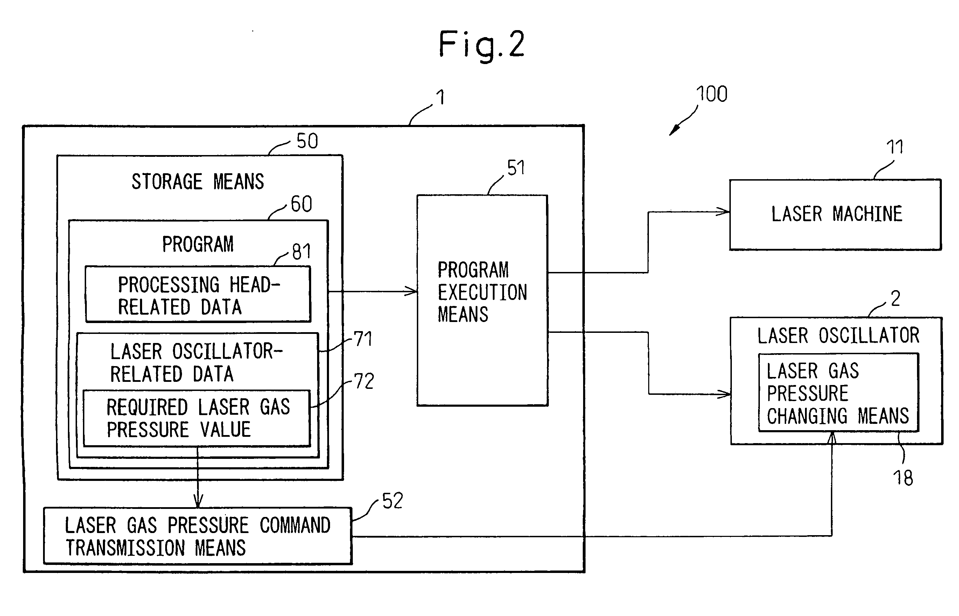

Fig. 2 is a block diagram showing a laser processing device not covered by the scope of the present invention. As shown in Fig. 2, the control means 1 of the laser processing device 100 mainly includes a storage means 50 for storing a processing program 60 and a program execution means 51 for executing the processing program 60. The processing program 60 mainly includes the processing condition data accessed when processing the work 20 to be processed. As shown, the processing condition data mainly include the laser oscillator-related data 71 for the laser oscillator 2 and the processing head-related data 81 for the processing head 16 of the laser machine 11. Also, the control means 1 includes a laser gas pressure command transmission means 52 described later.

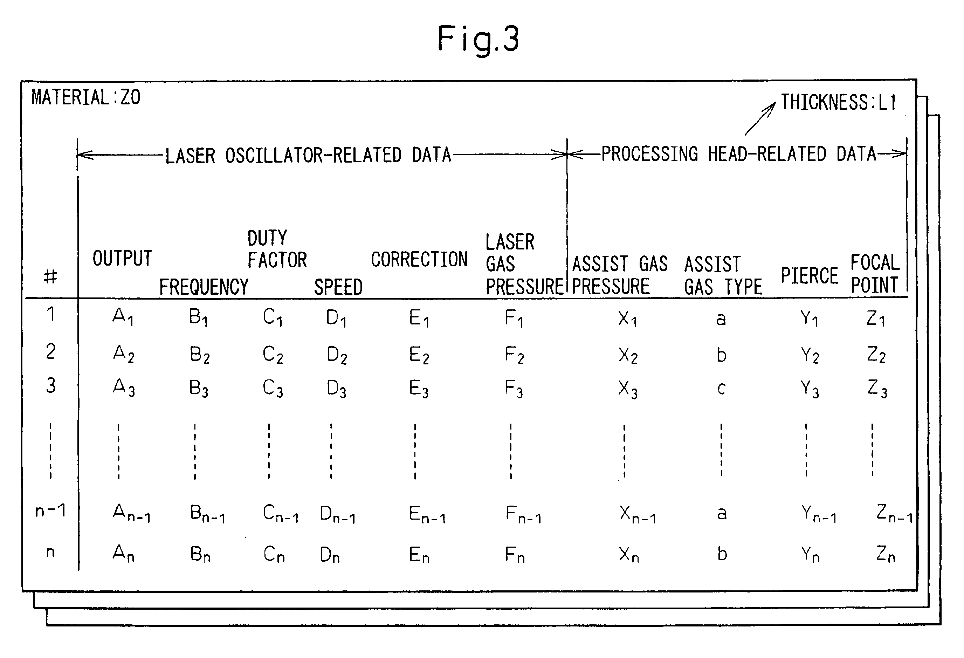

Fig. 3 is a schematic diagram showing a processing condition data table included in the program stored in the storage means of the control means. As shown in Fig. 3, the laser oscillator-related data 71 and the processing head-related data 81 are stored in the processing condition data table. The processing condition data table further includes the types (materials) of the work 20 to be processed.

In Fig. 3, the laser oscillator-related data 71 include the laser power (output), the frequency, the duty factor, the processing speed (velocity), the laser beam correction amount (correction) and the required laser gas pressure value 72 (laser gas pressure). The processing head-related data 81, on the other hand, include the pressure of the assist gas (assist gas pressure) supplied to the processing head, the type of the assist gas, the time required for pierce operation (pierce), the focal point (focus) and the thickness of the work 20 to be processed (plate thickness).

The laser oscillator-related data 71 and the processing head-related data 81 are the optimum data determined experimentally in adaptation to the type of the work 20 to be processed, the shape into which to be processed and the required cutting quality. As shown in Fig. 3, therefore, a plurality of processing condition data tables corresponding to the types of the work 20 to be processed are stored.

For the operation of the laser processing device 100, the laser oscillator 2 is activated first. The laser gas is supplied into the discharge tube 9 through the laser gas supply port 17 by the laser gas pressure changing means 18 of the laser oscillator 2. Then, the laser gas is circulated in a circulation path including the discharge tube 9 by a turbo blower 14. As indicated by arrows in Fig. 1, the laser gas sent out from the turbo blower 14 is supplied to discharge sections 29a, 29b through a heat exchanger 12' for removing the compression heat.

In the discharge sections 29a, 29b, a predetermined voltage such as an AC voltage of several hundred kHz to several tens of MHz is applied by the discharge electrodes 7a, 7b. The laser gas is excited by the discharge operation thereby to generate a laser beam. In accordance with a well-known principle, the laser beam is amplified in the optical resonator, and can be output through the output mirror 8. The laser gas increased in temperature by the discharge operation is cooled by the heat exchanger 12 and returned to the turbo blower 14. In the process, the cooling water circulation system 22 is activated to cool the laser gas in the discharge tube 9.

With the activation of the laser oscillator 2, the program execution means 51 reads and executes the processing program 60 in the storage means 5. As a result, various signals corresponding to the laser oscillator-related data 71 and the processing head-related data 81 are transmitted to the laser oscillator 2 and the laser machine 11 which, in turn, are driven in accordance with the laser oscillator-related data 71 and the processing head-related data 81, respectively.

Specifically, a laser beam corresponding to the laser oscillator-related data 71 is generated from the laser oscillator 2. The laser beam supplied to the laser machine 11 is appropriately reflected by three reflectors 10a, 10b, 10c, converged by a focusing lens 13, and radiated on the work 20 through the processing head 16. As a result, the work 20 to be processed can be cut, welded or otherwise machined based on the processing condition data table.

As can be understood from Fig. 2, the laser gas pressure command transmission means 52 accesses the required laser gas pressure value 72 of the laser oscillator-related data 71 corresponding to the work 20 to be processed, at the time of execution of the processing program 60 by the program execution means 51, i.e. during the laser processing operation according to the present invention. The laser gas pressure command transmission means 52, based on the required laser gas pressure value 72 accessed, creates a laser gas pressure command and transmits it to the laser gas pressure changing means 18 of the laser oscillator 2.

The laser gas pressure changing means 18, in response to the laser gas pressure command, either supplies the laser gas from the laser gas supply port 17 to the discharge tube 9 or discharges the laser gas through the laser gas discharge port 19. As a result, the pressure of the laser gas is increased or decreased to a value corresponding to the required laser gas pressure value 72. Once the pressure of the laser gas reaches a value corresponding to the required laser gas pressure value 72, a laser beam is output and the work 20 to be processed is actually processed. Incidentally, when changing the laser gas pressure, the laser power supply is controlled at the same time to maintain the discharge operation.

As described above, the laser oscillator-related data 71 including the required laser gas pressure value 72 and the processing head-related data 81 are the optimum data predetermined for the corresponding types etc. of the work 20 to be processed. In the prior art, the required laser gas pressure value 72 is not stored and the laser gas pressure is not controlled at the time of laser processing operation. In contrast, the laser gas pressure is controlled based on the required laser gas pressure value 72, and therefore, as compared with the prior art, a laser beam meeting the requirements of the material of the work to be processed, the shape into which it is to be processed and the required cutting quality can be output thereby to improve the processing performance of the laser processing apparatus 100.

Also, in the prior art, a plurality of laser processing devices are required to be prepared or the existing processing head is required to be replaced with another processing head for processing different types of the work to be processed. According to this invention, in contrast, the processing performance of the laser processing device 100 is so improved that the requirement to process a greater variety of the works 20 than in the prior art can be met, thereby reducing the need of preparing a plurality of laser processing devices or the need of replacing the processing head.

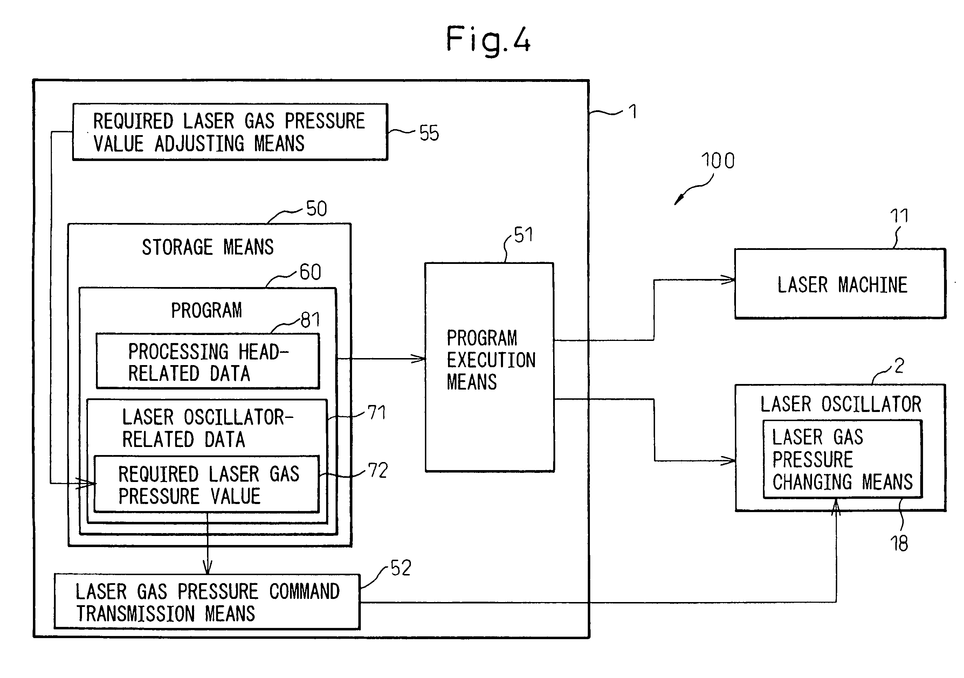

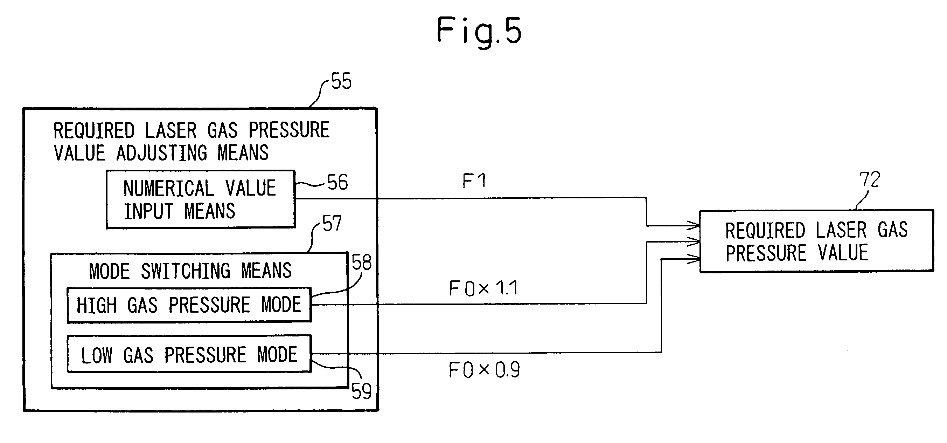

Fig. 4 is a block diagram showing a laser processing device according to the modification of Fig. 2. Fig. 5 is a block diagram showing a required laser gas pressure value adjusting means 55. In this modification, the control means 1 includes the required laser gas pressure value adjusting means 55. As shown in Fig. 5, the required laser gas pressure value adjusting means 55 may comprise a numerical value input means 56, for example, included in the control means 1.

As shown in Fig. 5, according to this modification, if the operator of the laser processing device 100 inputs a numerical value F1, for example, by a numerical value input means 56, this numerical value F1 is supplied to the storage means 50 and replaces the initial value F0 of the required laser gas pressure value 72. As a result, the initial value F0 of the required laser gas pressure value 72 can be easily and simply changed.

The required laser gas pressure value adjusting means 55 can be used advantageously especially in the case where, during the laser processing operation of one of a plurality of works of a given type, for example, the need arises to process a different type of the work. In such a case, the given type of work being processed can be replaced with the different type of work quickly without replacing the processing program. Also, in the case where the numerical value input means 56 is used as the required laser gas pressure adjusting means 55, a specific numerical value of the required laser gas pressure value 72 can be input.

Also, as shown in Fig. 5, the required laser gas pressure value adjusting means 55 may comprise a mode switching means 57 for switching the laser gas pressure between a high gas pressure mode 58 and a low gas pressure mode 59. In the case where the operator selects the high gas pressure mode 58 of the mode switching means 57, for example, the value F0 x 1.1 which is 10 % higher than the initial value F0 of the required laser gas pressure value 72 replaces the initial value F0 of the required laser gas pressure value 72. In similar fashion, upon selection of the low gas pressure mode 59, the value F0 x 0.9 which is 10 % lower than the initial value F0 of the required laser gas pressure value 72 replaces the initial value F0 of the required laser gas pressure value 72. As a result, the required laser gas pressure value can be changed very easily.

According to this invention, in the case where the thickness L of the work 20 to be processed is comparatively large, the required laser gas pressure value 72 and the laser output A included in the laser oscillator-related data 71 are set to be comparatively large. Similarly, in the case where the thickness L of the work 20 to be processed is comparatively small, the required laser gas pressure value 72 and the laser output A included in the laser oscillator-related data 71 are set to be comparatively small. In the present invention, therefore, the required laser gas pressure value adjusting means 55 of the control means 1 automatically performs the process of switching between the high gas pressure mode 58 and the low gas pressure mode 59 through the mode switching means 57, as described later.

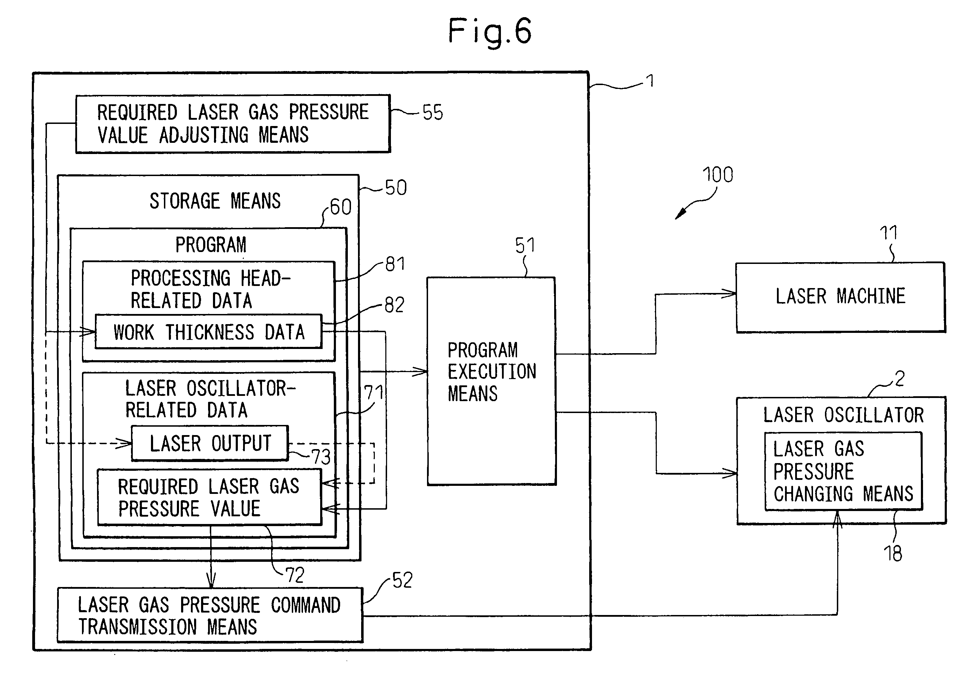

Fig. 6 is a block diagram showing a laser processing device according to the invention as defined in the appended claims. The required laser gas pressure value adjusting means 55 analyzes the contents of the processing program 60 before the execution thereof. Specifically, the required laser gas pressure value adjusting means 55 reads the thickness L of the work included in the processing head-related data 81 and/or the laser output of the laser oscillator-related data 71 set in the processing program 60.

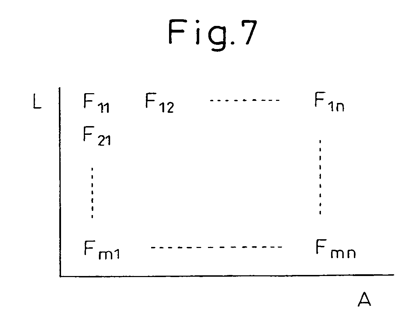

As shown in Fig. 7, the laser gas pressure is stored in the storage means 50, separately from the processing condition data table, in the form of a map as a function of the thickness L of the work to be processed and the laser output A. In the map shown in Fig. 7, in the case where the thickness L of the work to be processed is comparatively large, the laser gas pressure is also comparatively high. Also, in the case where the laser output A is comparatively large, the laser gas pressure is comparatively high.

The required laser gas pressure adjusting means 55 determines the laser gas pressure from the map of Fig. 7 based on the thickness L and the laser output A that have been read, and this value replaces the initial value F0 of the required laser gas pressure value 72. By doing so, a similar effect to that described above is obtained. Also, according to the present invention, even in the case where a conventional processing condition data table, not containing the required laser gas pressure value 72, is used, the optimum required laser gas pressure value 72 can be set from the map using the thickness L and the laser output A. Incidentally, the map shown in Fig. 7 may be configured for use by reference to only one of the thickness L and the laser output A.

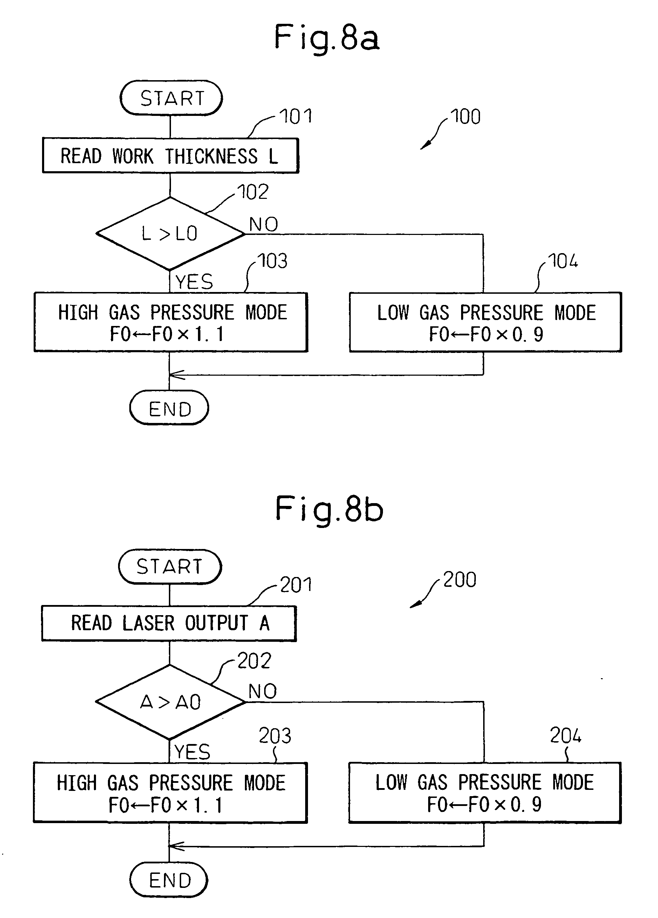

Even in the case where the mode switching means 57 according to the first embodiment shown in Fig. 5 is used, the required laser gas pressure value adjusting means 55 may analyze the processing program 60. Figs. 8a, 8b are flowcharts showing the operation of the required laser gas pressure value adjusting means. The program for the flowcharts 100, 200 is stored in the storage means 50 of the control means 1.

As shown in these drawings, the thickness L of the work to be processed or the laser output A, after being read from the processing program 60 (steps 101, 201), is compared with the reference value L0 or A0, respectively (steps 102, 202). In the case where the thickness L of the work to be processed or the laser output A is larger than the predetermined values L0 or A0, as the case may be, the high gas pressure mode 58 is selected to increase the laser gas pressure. In the case where the thickness L of the work to be processed or the laser output A is not larger than the predetermined value L0 or A0, on the other hand, the low gas pressure mode 59 is selected thereby to decrease the laser gas pressure. Also in such cases, the optimum mode can be automatically selected in accordance with the contents of the processing program before the laser processing operation.

In Figs. 5 and 8, the initial value of the laser gas pressure is increased or decreased by 10 % only as an example. It is apparent that the initial value of the laser gas pressure can, of course, be increased or decreased by a different percentage.

This invention is explained above with reference to typical embodiments, and it will be understood, by those skilled in the art, that this invention can be altered as described above and variously modified or added to without departing from the scope thereof as defined in the appended claims.

## Claims

1. A laser processing device (100) comprising:
a laser oscillator (2) for outputting a laser beam by exciting a laser gas;
a laser machine (11) for irradiating a work to be processed (20), with the laser beam output from the laser oscillator (2); and
a control means (1) for controlling the laser oscillator (2) and the laser machine (11);
**characterized in that** the control means (1) includes a storage means (50) for storing a processing program (60) for the work to be processed (20), and the processing program (60) includes a required laser gas pressure value (72) of the laser oscillator (2) for the laser processing operation, which value is determined in accordance with the processing specifics of the work to be processed (20),
wherein the control means (1) further includes a required laser gas pressure value adjusting means (55) for adjusting the required laser gas pressure value (72),
and wherein the control means (1) further includes a laser gas pressure command transmission means (52) for transmitting a laser gas pressure command based on the required laser gas pressure value (72) to the laser oscillator (2) during the laser processing operation, wherein
the required laser gas pressure value adjusting means (55) automatically adjusts the required laser gas pressure value (72) in accordance with the thickness (L) of the work to be processed (20) and/or the laser output (A) of the laser oscillator (2) included in the processing program (60) and
that the laser oscillator (2) includes a laser gas pressure changing means (18) for changing the laser gas pressure of the laser oscillator (2) in accordance with the laser gas pressure command transmitted by the laser gas pressure command transmission means (52) of the control means (1) during the laser processing operation.

2. A laser processing device as set forth in claim 1, wherein the required laser gas pressure value adjusting means (55) comprises a numerical value input means (56).

3. A laser processing device as set forth in claim 1, wherein the required laser gas pressure value adjusting means (55) is a switching means (57) for switching to a high pressure mode (58) and to a low pressure mode (59), and the required laser gas pressure value (72) is adjusted in accordance with the high pressure mode (58) or the low pressure mode (59) selected by the switching means (57).

4. A laser processing device as set forth in claim 3, wherein the high pressure mode (58) and the low pressure mode (59) are selected automatically by the switching means (57) in accordance with the thickness (L) of the work to be processed (20) and/or the laser output of the laser oscillator (2) included in the processing program (60).

5. A laser processing device as set forth in one of the claims 1 to 4,
wherein the storage means (50) has stored therein the relation between the thickness (L) of the work to be processed (20) and/or the laser output (A) and the required laser gas pressure value (72),
and wherein the laser gas pressure command transmission means (52) is adapted to transmit to the laser oscillator (2) a laser gas pressure command based on the required laser gas pressure value (72) determined from the relation between the thickness (L) of the work to be processed (20) and/or the laser output (A) and the required laser gas pressure value (72).

## Patentansprüche

1. Laserbearbeitungsvorrichtung (100) mit:
einem Laseroszillator (2) zum Ausgeben eines Laserstrahls durch Anregen eines Lasergases;
einer Lasermaschine (11) zum Bestrahlen eines zu bearbeitenden Werkstücks (20) mit dem von dem Laseroszillator (2) ausgegebenen Laserstrahl; und
einer Steuereinrichtung (1) zum Steuern des Laseroszillators (2) und der Lasermaschine (11), **dadurch gekennzeichnet dass**
die Steuereinrichtung (1) eine Speichereinrichtung (50) zum Speichern eines Bearbeitungsprogramms (60) für das zu bearbeitendende Werkstück (20) umfasst, und das Bearbeitungsprogramm (60) einen benötigten Lasergasdruckwert (72) des Laseroszillators (2) für den Laserbearbeitungsbetrieb enthält, wobei dieser Wert in Übereinstimmung mit den Bearbeitungseigenschaften des zu bearbeitenden Werkstücks (20) bestimmt ist,
wobei die Steuereinrichtung (1) ferner eine Einstelleinrichtung (55) für den erforderlichen Lasergasdruckwert zum Einstellen des erforderlichen Lasergasdruckwertes (72) umfasst,
und wobei die Steuereinrichtung (1) ferner eine Lasergasdruckanweisungsübertragungseinrichtung (52) zum Übertragen einer Lasergasdruckanweisung basierend auf dem erforderlichen Lasergasdruckwert (72) während des Laserbearbeitungsbetriebs an den Laseroszillator (2) umfasst,
wobei die Einstelleinrichtung (55) für den erforderlichen Lasergasdruckwert automatisch den erforderlichen Lasergasdruckwert (72) nach Maßgabe der in dem Bearbeitungsprogramm (60) enthaltenen Dicke (L) des zu bearbeitenden Werkstücks (20) und/oder der Laserausgabe (A) des Laseroszillators (2) einstellt und
dass der Laseroszillator (2) eine Lasergasdruckänderungseinrichtung (18) zum Ändern des Lasergasdrucks des Laseroszillators (2) nach Maßgabe der durch die Lasergasdruckanweisungsübertragungseinrichtung (52) der Steuereinrichtung (1) während des Laserbearbeitungsbetriebs übertragenen Lasergasdruckanweisung umfasst.

2. Laserbearbeitungsvorrichtung nach Anspruch 1, wobei die Einstelleinrichtung (55) für den erforderlichen Lasergasdruckwert eine Eingabeeinrichtung (56) für numerische Werte umfasst.

3. Laserbearbeitungsvorrichtung nach Anspruch 1, wobei die Einstelleinrichtung (55) für den erforderlichen Lasergasdruckwert eine Schalteinrichtung (57) zum Schalten in einen Hochdruckmodus (58) und einen Niedrigdruckmodus (59) ist, und der erforderliche Lasergasdruckwert (72) nach Maßgabe des durch die Schalteinrichtung (57) ausgewählten Hochdruckmodus (58) oder Niedrigdruckmodus (59) eingestellt ist.

4. Laserbearbeitungsvorrichtung nach Anspruch 3, wobei der Hochdruckmodus (58) und der Niedrigdruckmodus (59) automatisch durch die Schalteinrichtung (57) nach Maßgabe der in dem Bearbeitungsprogramm (60) enthaltenen Dicke (L) des zu bearbeitendenden Werkstücks (20) und/oder Laserausgabe des Laseroszillators (2) ausgewählt ist.

5. Laserbearbeitungsvorrichtung nach einem der Ansprüche 1 bis 4, wobei die Speichereinheit (50) in sich die Relation zwischen der Dicke (L) des zu bearbeitenden Werkstücks (20) und/oder der Laserausgabe (A) zu dem erforderlichen Lasergasdruckwert (72) gespeichert hält,
und wobei die Lasergasdruckanweisungsübertragungseinrichtung (52) dazu eingerichtet ist, an den Laseroszillator (2) eine Lasergasdruckanweisung zu übertragen, die auf dem Lasergasdruckwert (72) basiert, der aus der Relation der Dicke (L) des zu bearbeitenden Werkstücks (20) und/oder der Laserausgabe (A) zu dem erforderlichen Lasergasdruckwert (72) bestimmt ist.

## Revendications

1. Dispositif de traitement au laser (100) comprenant :
un oscillateur laser (2) pour délivrer en sortie un faisceau laser par excitation d'un gaz laser ;
une machine laser (11) pour projeter sur une pièce devant être traitée (20) le faisceau laser délivré en sortie de l'oscillateur laser (2) ; et
un moyen de commande (1) pour commander l'oscillateur laser (2) et la machine laser (11) ;
**caractérisé en ce que** le moyen de commande (1) inclut un moyen de stockage (50) pour stocker un programme de traitement (60) pour la pièce devant être traitée (20), et le programme de traitement (60) inclut une valeur de pression de gaz laser requise (72) de l'oscillateur laser (2) pour l'opération de traitement au laser, laquelle valeur est déterminée en fonction des caractéristiques spécifiques de traitement de la pièce devant être traitée (20),
dans lequel le moyen de commande (1) inclut en outre un moyen d'ajustement de valeur de pression de gaz laser requise (55) pour ajuster la valeur de pression de gaz laser requise (72),
et dans lequel le moyen de commande (1) inclut en outre un moyen de transmission de commande de pression de gaz laser (52) pour transmettre une commande de pression de gaz laser sur la base de la valeur de pression de gaz laser requise (72) à l'oscillateur laser (2) pendant l'opération de traitement au laser, dans lequel
le moyen d'ajustement de valeur de pression de gaz laser requise (55) ajuste automatiquement la valeur de pression de gaz laser requise (72) en fonction de l'épaisseur (L) de la pièce devant être traitée (20) et/ou de la sortie de laser (A) de l'oscillateur laser (2) incluse dans le programme de traitement (60) et
**en ce que** l'oscillateur laser (2) inclut un moyen de changement de pression de gaz laser (18) pour changer la pression de gaz laser de l'oscillateur laser (2) en fonction de la commande de pression de gaz laser transmise par le moyen de transmission de commande de pression de gaz laser (52) du moyen de commande (1) pendant l'opération de traitement au laser.

2. Dispositif de traitement au laser selon la revendication 1, dans lequel le moyen d'ajustement de valeur de pression de gaz laser requise (55) comprend un moyen d'entrée de valeur numérique (56).

3. Dispositif de traitement au laser selon la revendication 1, dans lequel le moyen d'ajustement de valeur de pression de gaz laser requise (55) est un moyen de commutation (57) pour commuter entre un mode haute pression (58) et un mode basse pression (59), et la valeur de pression de gaz laser requise (72) est ajustée en fonction du mode haute pression (58) ou du mode basse pression (59) sélectionné par le moyen de commutation (57).

4. Dispositif de traitement au laser selon la revendication 3, dans lequel le mode haute pression (58) et le mode basse pression (59) sont sélectionnés automatiquement par le moyen de commutation (57) en fonction de l'épaisseur (L) de la pièce devant être traitée (20) et/ou de la sortie de laser de l'oscillateur laser (2) incluse dans le programme de traitement (60).

5. Dispositif de traitement au laser selon l'une des revendications 1 à 4,
dans lequel le moyen de stockage (50) a stocké dans celui-ci la relation entre l'épaisseur (L) de la pièce devant être traitée (20) et/ou la sortie de laser (A) et la valeur de pression de gaz laser requise (72),
et dans lequel le moyen de transmission de commande de pression de gaz laser (52) est adapté pour transmettre à l'oscillateur laser (2) une commande de pression de gaz laser sur la base de la valeur de pression de gaz laser requise (72) déterminée à partir de la relation entre l'épaisseur (L) de la pièce devant être traitée (20) et/ou la sortie de laser (A) et la valeur de pression de gaz laser requise (72).
